# EUROPEAN PATENT APPLICATION

(11) **EP 2 028 891 A1**
(43) Date of publication of application: **25.02.2009**
(21) Application number: 07301294.0
(22) Date of filing: 03.08.2007
(51) Int. Cl.: H04W 16/04

(54) **Reducing interference in a cellular radio communication network**

(71) Applicant: Alcatel Lucent, 75008 Paris (FR)
(72) Inventor: Necker Marc, 70565 Stuttgart (DE)
(74) Representative: Wetzel, Emmanuelle

(57) **Abstract**

The present invention relates to a method for reducing interference in a cellular radio communication network, said network comprising a plurality of base stations and a plurality of terminals to be scheduled on frequency and/or time resources.

According to the present invention, the method comprises the steps of:
- determining interference parameters from at least two base stations;
- reporting said interference parameters from said at least two base stations to an interference coordinator;
- determining at said interference coordinator resources to be allocated to said plurality of terminals minimising an overall interference criterion;
- reporting from said interference coordinator to said at least two base stations the resource allocated to the different terminals.

## Description

### BACKGROUND OF THE INVENTION

The present invention relates to a method for reducing interference in a cellular radio communication system.

A particular object of the present invention is to provide a more efficient resource allocation based on interference coordination principle.

Another object of the invention is to provide a corresponding base station and interference coordinator.

### SUMMARY OF THE INVENTION

These objects, and others that appear below, are achieved by a method for reducing interference in a cellular radio communication network according to claim 1, an interference coordinator according to claim 7 and a base station according to claim 9.

According to the present invention, each base station of the network determines interference parameters destined to determine an interference situation in the system. This interference situation in the system being preferably a collection of measurement values, which describes the amount of interference received from all other base stations in the system at the location of a particular mobile terminal, if those other base stations transmit to a particular mobile terminal. This collection of measurements allows to find out how much interference a transmission of an interfering base station to one of its mobile terminals causes to any other mobile terminal in the system.

The collection of measurement values, which describe the interference situation in the system, has preferably to be measured by a special procedure. For this measurement, dedicated measurement radio frames are inserted in regular intervals. In these measurement frames, the base stations transmit to all of their mobile terminals a known measurement sequence, which allows all other mobile terminals to determine the desired interference information and communicate it to their serving base station.

Alternatively, said interference parameters may be obtained from a database, for example based on the geographic coordinates of all mobile terminals and previously performed measurements or system level simulations. In this case, the interference parameters may be determined by the base station, but also by the interference coordinator.

The interference parameters or geographic coordinates are further transmitted to an interference coordinator which determines the resources to be allocated to the different terminals that minimizes an overall interference criterion. Preferably, a graph is generated and colored according to a graph coloring method. The interference coordinator collects the above described measurement values from all base stations. From these measurements, an interference graph is calculated, where the mobile terminals are the vertices and the edges represent critical interference relations in-between mobile terminals in such a way that terminals, which are adjacent in the graph, must not be served on the same resources. This graph is colored by means of a graph coloring algorithm, and the resulting colors are mapped to resource partitions. This information is communicated to every base station, which then serves mobile terminals in bad reception conditions only on their centrally determined resource partition.

The mapping resource to terminal determined at the interference coordinator is further reported to the different base stations.

The method according to the present invention is preferably used in an OFDMA based network supporting fractional frequency reuse. Different areas of the cells are associated different frequency reuse factors: higher reuse factor (e.g. frequency reuse 3) in general covers areas with weaker signal quality, which may be areas close to the cell border, but is not limited to areas close to the cell border, alternatively lower frequency reuse factor (e.g. frequency reuse 1) in general covers areas with high signal quality, which may be areas close to the base station, but not limited to areas close to the base station.

The method according to the present invention presents the advantage to reduce the overall interference in the network and as a consequence to further increase the network capacity.

Further advantageous features of the invention are defined in the dependent claims.

### BRIEF DESCRIPTION OF THE DRAWINGS

Other characteristics and advantages of the invention will appear on reading the following description of a preferred embodiment given by way of non-limiting illustrations, and from the accompanying drawings, in which:
Figure 1: Illustration of the AMC 2x3 mode
Figure 2: Hexagonal cell layout with wrap-around
Figure 3: Interference graph: Total sector throughput over Ds
Figure 4: Mean vertex degree of a mobile terminal in the interference graph. Top: two-tier coordination, *D_{S}* = 10 dB. Middle: two-tier coordination, *D_{S}* = 0 dB. Bottom: zero-tier coordination, *D_{S} =* 20 dB. Note the different scales.
Figure 5: 5% throughput quantile over aggregate sector throughput for differnt values of *D*_{*S*,*o*} and *D*_{*S*,*i*} = {15; 20; 25} dB. Top: one-tier outer graph, Bottom: two-tier outer graph.
Figure 6: Throughput in kBit/s depending on position for global two-tier coordination with *D_{S}* = 10 dB.
Figure 7: Throughput in kBit/s depending on position for optimized global zero-tier/two-tier coordination with *D*_{*S*,*o*} = 10 dB and *D*_{*S*,}*ᵢ =* 20 dB.
Figure 8: Schematic illustration of FFR with the same (top) and disjoint (bottom) resources for reuse 1 and reuse 3 areas.
Figure 9: Illustration of system concept with central coordinator
Figure 10: *N_{C}*-fold reuse scheme within one AMC-zone in one MAC frame.
Figure 11 : *N_{C}*-fold reuse scheme over multiple consecutive MAC frames.
Figure 12: Signaling-time diagram for the communication of base stations with the FFR coordinator
Figure 13: 5% throughput quantile over aggregate sector throughput for differnt values of *D*_{*S*,*o*} and *D*_{*S*,*i*} = {15; 20; 25} dB. Coordinated FFR with ideal signaling conditions. Top: one-tier centrally coordinated by FFR Coordinator, Bottom: two-tier centrally coordinated by FFR Coordinator.
Figure 14: Mean number of colors *N_{C}* required for the coloring in the FFR coordinator with Dsatur coloring heuristic. *D*_{*S*,*i*} = 20 dB.
Figure 15: Aggregate sector throughput (top) and 5% throughput quantile (bottom) over update period *T*_{*C*,*period*} for different delays *T*_{*C*,*delay.*} One-tier centrally coordinated, of *D*_{*S*,*o*} = 0 dB, *D*_{*S*,}*ᵢ =* 20 dB.
Figure 16: Throughput in kBit/s depending on position for Coordinated FFR with *D*_{*S*,*o*} = 0 dB and *D*_{*S*,*i*} = 20 dB_{.} *T*_{*C*,*delay*} = 1000 ms, *T*_{*C*,}*_{period} =* 2000 ms.

### DETAILED DESCRIPTION OF THE INVENTION

In recent years, Orthogonal Frequency Division Multiple Access (OFDMA) has become an attractive transmission technology, which is part of various emerging system standards for broadband cellular communications. Examples include the 3GPP Long Term Evolution (LTE) and 802.16e WiMAX. In OFDMA, mobile terminals are multiplexed in time and frequency. A major problem in these systems is the inter-cell interference, which is caused by neighboring cells when transmitting on the same time and frequency slots. This problem can be solved by using beamforming antennas and coordinating the transmissions among base stations. This is known as interference coordination. In this paper, we present a distributed algorithm for interference coordination, which enhances the cell edge performance with global information provided by a central coordinator. The signaling delay during the communication with the central coordinator can be on the order of seconds, while an additional local interference coordination in each base station ensures a high performance even in dynamic environments. This combination of global and local coordination enhances the overall spectral efficiency by 50% compared to a Reuse 3 system while maintaining the same cell edge performance.

### 1 Introduction

Orthogonal Frequency Division Multiple Access (OFDMA) is the basis for several emerging standards for wireless broadband communication. In particular, it is the underlying transmission technology for 802.16e (WiMAX) and the future 3GPP Long Term Evolution (LTE). In OFDMA, the different users are multiplexed in time and frequency based on an underlying OFDM system. Therefore, OFDMA is basically a combination of Frequency and Time Division Multiple Access (FDMA and TDMA). A major problem in these systems is the inter-cell interference, which is caused by neighboring cells when transmitting in the same frequency/time slots. This eventually leads to severe performance degradation or even connection loss.

There exist several approaches to mitigate inter-cell interference. The most common approach is to employ a frequency reuse pattern and avoid the usage of the same frequency bands in adjacent cells. The disadvantage of this scheme is the waste of precious frequency resources. Instead, it is desirable to reuse the whole available frequency spectrum in every cell. Another possibility to lower inter-cell interference is to use beamforming antennas, which direct their transmission power towards the currently served mobile terminal. This minimizes interference towards other mobile terminals. Last but not least, the transmissions in different cells can be coordinated to optimize the interference situation in all cells. This is referred to as interference coordination (IFCO). All these approaches can be combined to optimize the system performance in a dynamic fashion [13].

In [11] we introduced an interference coordination algorithm which is based on an *interference graph*. This graph represents critical interference relations among mobile terminals. If two mobile terminals in different cells have a critical relation, they may not be served on the same frequency/time resource. This scheme requires a central omniscient entity which is capable to acquire the system state instantly and perform scheduling decisions in all cells on a per-frame basis. Naturally, such a scheme is not implementable. However, it provides important information about the key performance parameters and also delivers an estimate of the upper performance bound.

In [13], we limited this interference graph based scheme to the coordination of the cell sectors served by the same base station. This was combined with Fractional Frequency Reuse (FFR), which applies a frequency reuse of 1 in the inner portions of the cell and a frequency reuse of 3 in the outer portions. This combination can achieve the same aggregate cell throughput as the global scheme from [11], but it falls short with respect to the throughput at the cell borders.

This paper has two main contributions. First, we considerably enhance the global scheme of [11] by an optimized generation of the interference graph. Second, based on these optimizations, we present a novel interference coordination scheme named Coordinated *Fractional* Frequency Reuse, which achieves a high aggregate and cell border performance at the same time. This scheme does not require an omniscient device which performs scheduling decisions every frame. Instead, it relies on the communication of the base stations with a central entity on a much longer time scale, e.g., on the order of seconds. Therefore, the proposed scheme is well implementable in a real system.

This paper is structured as follows. Section 2 introduces the considered 802.16e system and its simulation model. Section 3 rehearses the global scheme from [11] and presents an optimized generation of the interference graph. Subsequently, section 4 briefly introduces the concept of FFR and derives the proposed coordinated FFR scheme. Finally, section 5 presents a thorough performance evaluation of the coordinated FFR scheme, and section 6 concludes the paper.

### 2 System model

### 2.1 Overview of transmission system

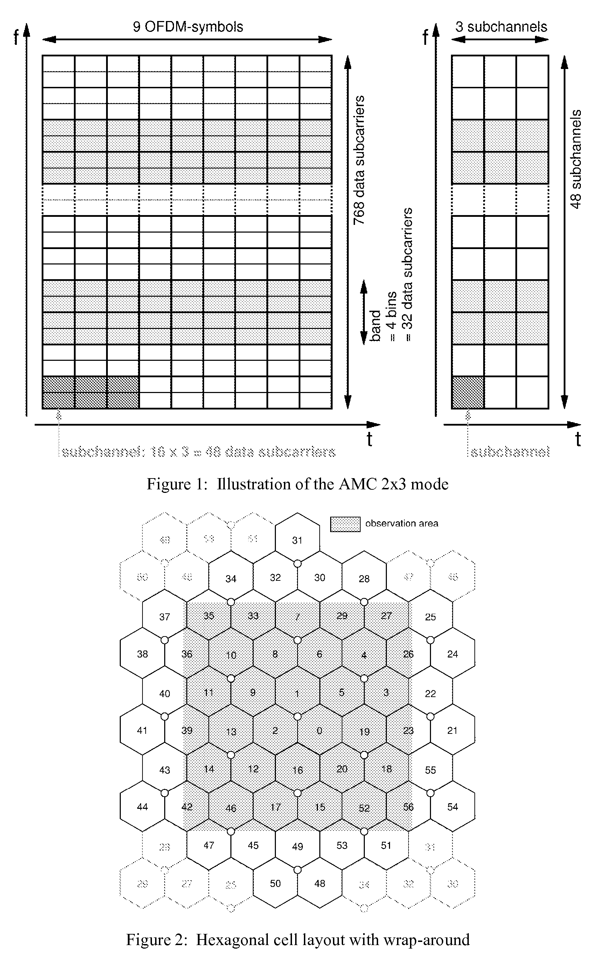

We consider an 802.16e-system [10] with a total available system bandwidth of 10 MHz and a MAC-frame-length of 5 ms. This results in a total number of 49 OFDM-symbols per MAC-frame and 768 data subcarriers per OFDM-symbol. Each MAC-frame is subdivided into an uplink and a downlink subframe. Both subframes are further divided into zones, allowing for different operational modes. In this paper, we focus on the Adaptive Modulation and Coding (AMC) zone in the downlink subframe. In particular, we consider the AMC 2x3 mode, which defines subchannels of 16 data subcarriers by 3 OFDM-symbols. This is illustrated in the left part of Fig. 1. A subchannel corresponds to the resource assignment granularity for a particular mobile terminal. The AMC zone can therefore be abstracted by the two-dimensional resource field shown in the right part of Fig. 1.

We assume the AMC zone to consist of 9 OFDM-symbols, corresponding to a total number of 48·3 available subchannels. Adaptive Modulation and Coding was applied ranging from QPSK 1/2 up to 64QAM 3/4. This results in a theoretical maximum data rate of about 6.2 Mbps within the AMC zone. The burst profile management is based on the exponential average of the terminal's SINR conditions with channel feedback delay of one MAC-frame.

### 2.2 Simulation model and metrics

We consider a hexagonal cell layout comprising 19 base stations at a distance of *d_{BS}* = 1400 m with 120° cell sectors as shown in Fig. 2. The scenario is simulated with wrap-around, making all cells equal with no distinct center cell. All cells were assumed to be synchronized on a frame level. Throughout our paper, we evaluate the shaded observation *area* when investigating the cell coverage, and the average of all cell sectors when considering throughput metrics. Besides the total sector throughput, we evaluate the 5% throughput quantile, which is a good indication for the achievable throughput in the cell border areas [3]. It is captured by measuring the average short-term throughput of each terminal within 4-second periods and calculating the quantile over all measurements. All throughput measures were taken on the IP-layer, capturing all overhead caused by fragmentation, padding, and retransmissions.

Every base station has 3 transceivers, each serving one cell sector. The transceivers are equipped with linear array beamforming antennas with 4 elements and gain patterns according to [11]. They can be steered towards each terminal with an accuracy of 1° degree, and all terminals can be tracked ideally.

### 2.3 Scenario and simulation parameters

The system model was implemented as a frame-level simulator using the event-driven simulation library IKR SimLib [1] with all relevant MAC protocols, such as ARQ and HARQ with chase combining. The path loss was modeled according to [8], terrain category B. Slow fading was considered using a log-normal shadowing model with a standard deviation of 8 dB. Frame errors were modeled based on BLER-curves obtained from physical layer simulations.

Each sector contains N mobile terminals moving at a velocity of υ = 30 km/h. The underlying mobility model is a random direction model with a mean free path length of 50 m and a maximum turning angle of 25°. All mobile terminals are bound to their respective cell sector in order to avoid handovers. A greedy traffic source is transmitting data towards each terminal, i.e., there is always data available to be transmitted for a terminal (see also [11]).

### 3 Interference Graph based Interference Coordination

### 3.1 Basic Concept

In [11], a scheme for global interference coordination in a cellular OFDMA network was proposed. It is based on an interference graph whose nodes represent the mobile terminals, and whose edges represent critical interference relations in-between the terminals. Terminals which are connected must not be served using the same set of resources. For each terminal, the interference from base stations within a certain diameter *d_{ic}* of the serving base station is calculated. Afterwards, the largest interferers are blocked from using the same set of resources by establishing a relation in the interference graph. This is done such that a desired minimum SIR *D_{S}* is achieved for each terminal. For a detailed description, please refer to [11].

The original scheme in [11] assumed a central omniscient device which is capable of acquiring the system state instantly and perform scheduling decisions on a per-frame basis. Naturally, such a scheme is not implementable. However, it provides important information about the key performance parameters and also delivers an estimate of the upper performance bound.

### 3.2 Performance

The two major configurable parameters of the interference graph based scheme are the desired minimum SIR Ds and the coordination diameter *d_{ic},* We refer to *d_{ic}* = 0 as zero-tier coordination, indicating a coordination only among sectors of the same base station. Alike, a one-tier coordination means a coordination of neighboring base station sites, i.e., *d_{ic} = d_{BS}*, and a two-tier coordination implies a global coordination of all cells in our scenario.

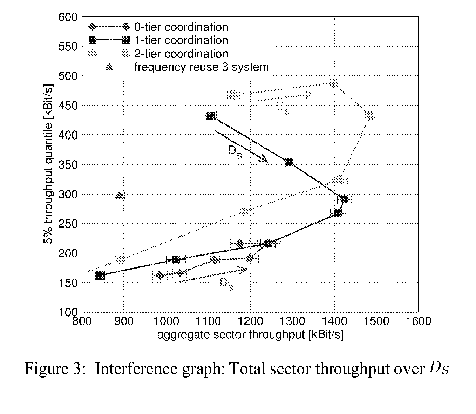

Figure 3 plots the 5% throughput quantile over the aggregate throughput per cell [13]. The zero-tier coordination, which can be implemented locally within a base station, achieves a significant improvement compared to the Reuse 3 scenario with respect to the overall cell sector throughput, but falls short with respect to the throughput quantile, i.e., with respect to the cell edge performance. As the number of coordinated tiers increases, the performance with respect to both the aggregate throughput and the throughput quantile increases.

### 3.3 Relation to graph coloring problem

Global interference coordination based on the interference graph is directly related to the graph coloring problem [12]. In the graph coloring problem, each node in a graph needs to be assigned one color such that no connected nodes are assigned the same color. If the colors correspond to non-overlapping resources on the air interface, then the solution of the graph coloring problem corresponds to the assignment of disjoint resources on the air interface to nodes which have a relation in the interference graph. In general, the graph coloring has to be recomputed whenever the interference graph changes, i.e., every frame.

Let *M* be the chromatic number of the interference graph, i.e., *M* is the number of colors which are required to solve the graph coloring problem. Then, for each scheduling round, the air interface resources need to be divided into *M* disjoint partitions. Each of these partitions is then assigned to a mobile terminal based on its assigned color. Note that a solution of the problem requires at least N colors, where N is the number of mobile terminals in each cell sector. In general, *M* will be larger than N, making more disjoint resource partitions necessary than there are mobile terminals to serve. Consequently, the resource utilization in a cell sector will drop and in general be ρ = *N*/*M* < 1_{.}

Graph coloring is an NP-hard problem. Various heuristics have been proposed to find near-optimal solutions. In this paper, we use the heuristic Dsatur [7] and a Tabu search technique [9] to obtain colorings. While Dsatur is quite fast, Tabu search obtains much better solutions, though at the cost of a highly increased computational complexity.

In contrast to these heuristics for the classical coloring problem, the resource assignment heuristic from [11], which was also used to generate the results of section 3.2, solves a variant of the graph coloring problem. It differs from the just described original graph coloring problem in that only a certain number *N_{F}* < *N* of mobile terminals is served within each scheduling round. In other words, only *N_{F}* colors are used, and only *N_{F}* mobile terminals need to be assigned a color. This leads to a much better resource utilization ρ as compared to when using a full coloring as described in this section, and consequently to a better system performance.

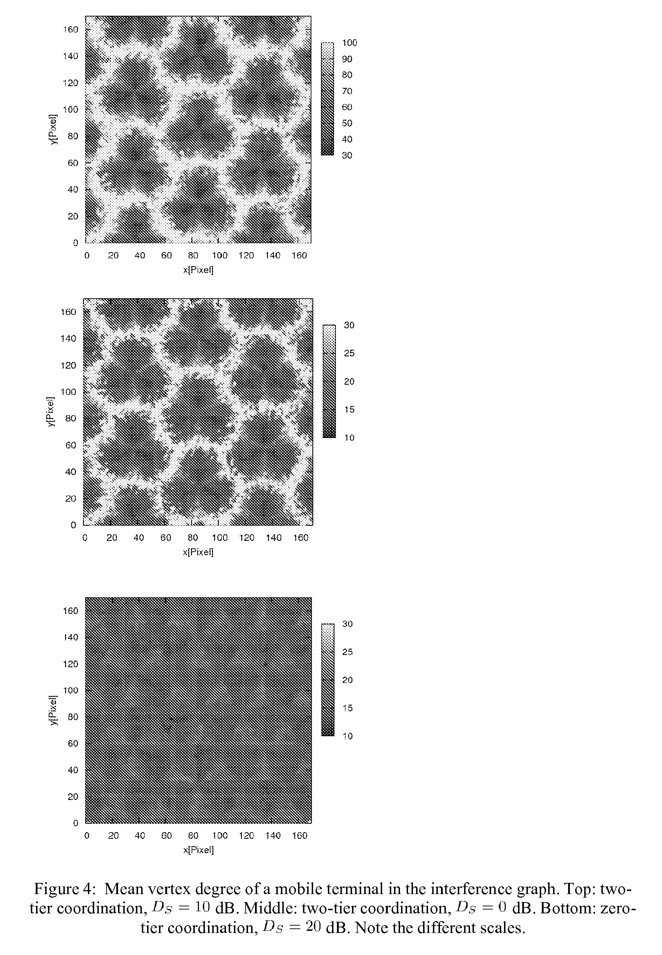

In both cases, the resource utilization ρ depends on the structure of the interference graph. In particular, it depends on the vertex degree of all nodes. For the full coloring as described above, a higher vertex degree will lead to a larger chromatic number *M* and a lower resource utilization ρ. Likewise, the performance of the coloring heuristic from [11] will suffer from a larger vertex degree. The most important parameters having an impact on the vertex degree are the coordination diameter *d_{ic}* and the minimum desired SIR *D_{S}.* If *d_{ic}* or *D_{S}* are increased, the vertex degree and hence the chromatic number *M* increases, leading to a lower resource utilization ρ. This is illustrated in Fig. 4, which plots the mean vertex degree of a node in the interference graph depending on the position of the corresponding mobile terminal. The figure illustrates the increase in the vertex degree for an increase of *d_{ic}* or *D_{S}*.

In the following section, we will evaluate ways to construct the interference graph in such a way that the vertex degree and hence *M* is reduced, eventually leading to a better resource utilization.

### 3.4 Performance Optimization

The results from [13], which were rehearsed in the previous sections, show that a one-tier or two-tier coordination with a fairly low desired SIR *D_{S}* achieves an excellent cell edge performance while falling short with respect to the aggregate throughput. On the other hand, a zero-tier coordination provides an increased aggregate performance while falling short with respect to the throughput quantile. Both configurations feature an interference graph with a relatively small vertex degree compared to the optimum case of a two-tier coordination with *D_{S} =* 10 dB, as can be seen from Fig. 4. This suggests that a separate generation of zero-tier and one/two-tier interference graphs and a subsequent merging of both graphs will lead to a lower vertex degree as in the two-tier case while providing an optimized SIR within the area. As discussed before, a lower vertex degree will lead to a lower chromatic number of the interference graph and hence potentially increase the system performance. Merging of the two graphs is done simply by including an edge in the merged graph whenever one of the two original graphs contains an edge.

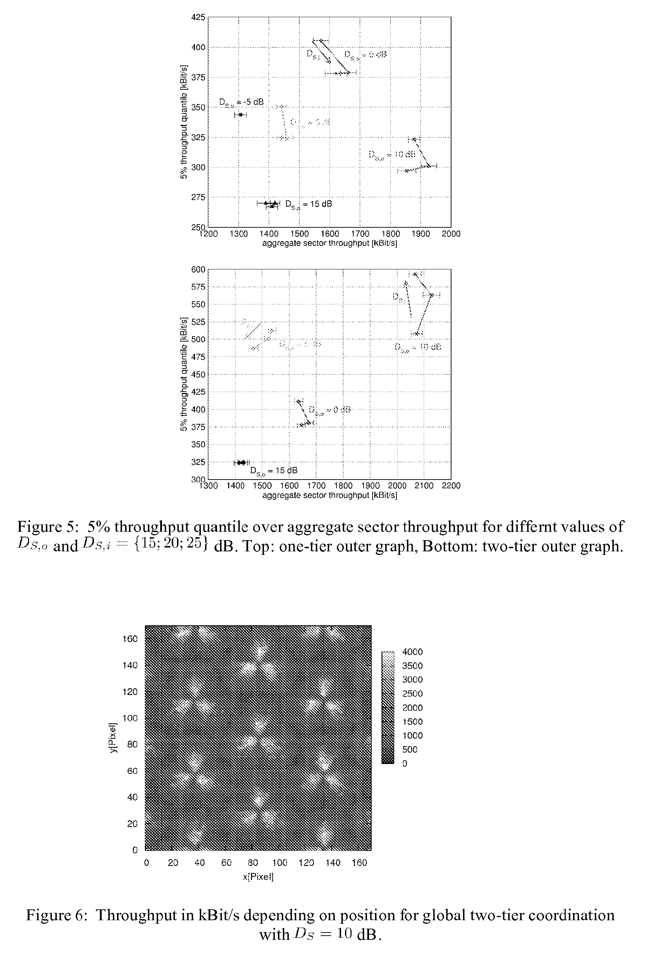

The performance of a system with a global coordination based on the combination of interference graphs is plotted in Fig. 5 for a combination of a zero-tier interference graph with a one-tier (left) and a two-tier (right) interference graph. We denote the one-tier graph as inner graph, which is generated for a desired minimum SIR *D*_{*S*,*i*}, and the one/two-tier graph as outer graph, generated for a desired minimum SIR *D*_{*S*,}*ₒ.*

Figure 5 shows a strong dependence of the system performance on *D*_{*S*,*o*}. As we increase *D*_{*S*,o} from - 5 dB in the one-tier case, we first observe a performance increase at *D_{S,o}* = 0 dB, while it decreases for *D*_{*S,*o} = 5 dB. For *D*_{*S*,*o*} = 10 dB the performance significantly improves again, and finally decreases for *D*_{*S*,}*ₒ =* 15 dB and larger values. The two separate maxima can be explained by the superposition of the curves in Fig. 3, which show maxima for different values of *D_{S}*. This superposition is caused by the merging of the interference graphs.

The combination of zero-tier and one-tier interference graphs (Fig. 5 left) has two optimal configurations. For *D*_{*S*,*o*} = 0 dB, the cell border performance is maximized, while for *D*_{*S*,*o*} = 10 dB the aggregate throughput is maximized. In contrast, the combination of zero-tier and two-tier interference graphs (Fig. 5 right) shows an optimal operating point for *D*_{*S*,}*ₒ =* 10 dB which maximizes both the aggregate throughput and the cell border performance. This raises the spectral efficiency of the global scheme by more than one third to over 1.1 Bit/Hz and can be explained with the better control of the two-tier scheme over the interference in the cell border areas.

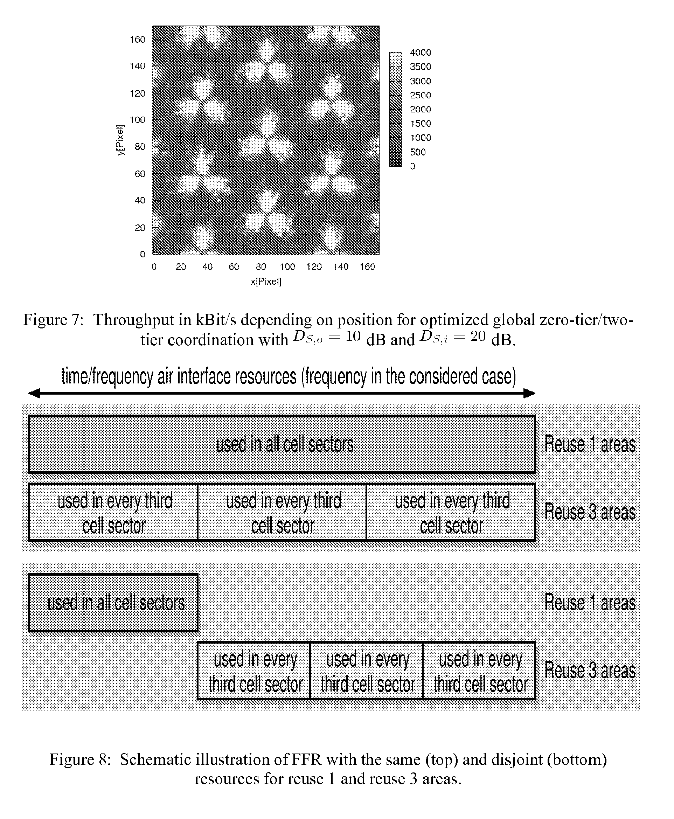

Figure 6 plots the throughput depending on the mobile terminal's position for the global two-tier coordination according to section 3.1 and [11]. Figure 7 plots the same metric for the optimized coordination mechanism with combined zero-tier and two-tier coordination. We can observe an increased throughput at the cell borders but also a substantial performance increase in the central parts of the cell sectors.

### 4 Coordinated Fractional Frequency Reuse

In this section, we first give an overview over state-of-the-art fractional frequency reuse techniques. Subsequently, we introduce the concept of Coordinated Fractional Frequency Reuse.

### 4.1 Classical Fractional Frequency Reuse

A system with a frequency reuse factor of 1 achieves a high resource utilization of 100%, while suffering from heavy inter-cell interference in the cell border areas. On the other hand, a frequency reuse 3 system achieves acceptable interference conditions at the cell border, but has a resource utilization of only 1/3. One possibility to resolve this dilemma is Fractional Frequency Reuse (FFR). With FFR, a frequency reuse of one is applied in areas close to the base station, and a higher reuse factor in areas closer to the cell border. This idea was proposed for GSM networks (see for example [6]) and has consequently been adopted in the WiMAX forum [2], but also in the course of the 3GPP Long Term Evolution (LTE) standardization, e.g., in [5] and [4].

Figure 8 schematically illustrates the division of air interface resources. Basically, there exist two options. [14] proposed that the reuse 1 and reuse 3 areas be on disjoint frequency bands (Fig. 8 bottom), while [5] and [4] use the full set of available resources in the reuse 1 areas and one third of the same resources in the reuse 3 areas (Fig. 8 top). In the remainder of this paper, we will base our work on the latter option. We will refer to mobile terminals in the reuse 1 area as reuse 1 terminals, and to mobile terminals in the reuse 3 area as reuse 3 terminals.

[14] proposes to combine FFR with a coordination of the transmissions among the sectors of one base station site. This lowers the interference between sectors belonging to the same base station. However, it is not possible to lower the interference caused by other base stations, which is why such a system still suffers from a rather low throughput at the cell border to neighboring base stations (see [13] for an extensive performance evaluation). In the following section, we will develop an IFCO scheme which overcomes this problem, and which eventually could be implemented under realistic signaling delays.

### 4.2 Coordinated Fractional Frequency Reuse

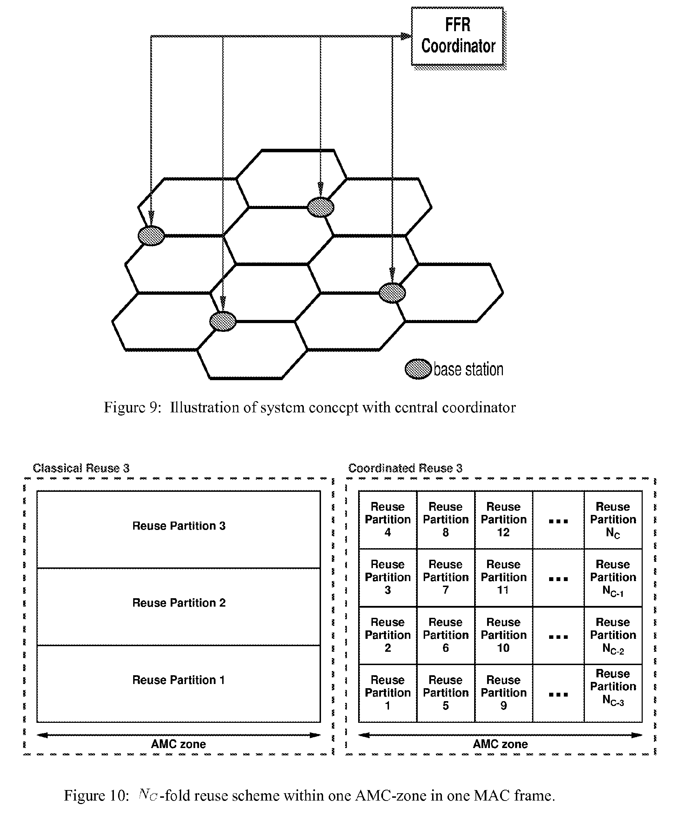

While the aggregate throughput in an FFR system can be increased by performing an additional local interference coordination among the sectors served by one base station (zero-tier coordination), the interference from other base stations cannot be controlled. Coordinated *Fractional* Frequency Reuse overcomes this drawback by introducing a generalized frequency reuse pattern for mobile terminals at the cell border which is coordinated by a central entity. This concept is illustrated in Fig. 9.

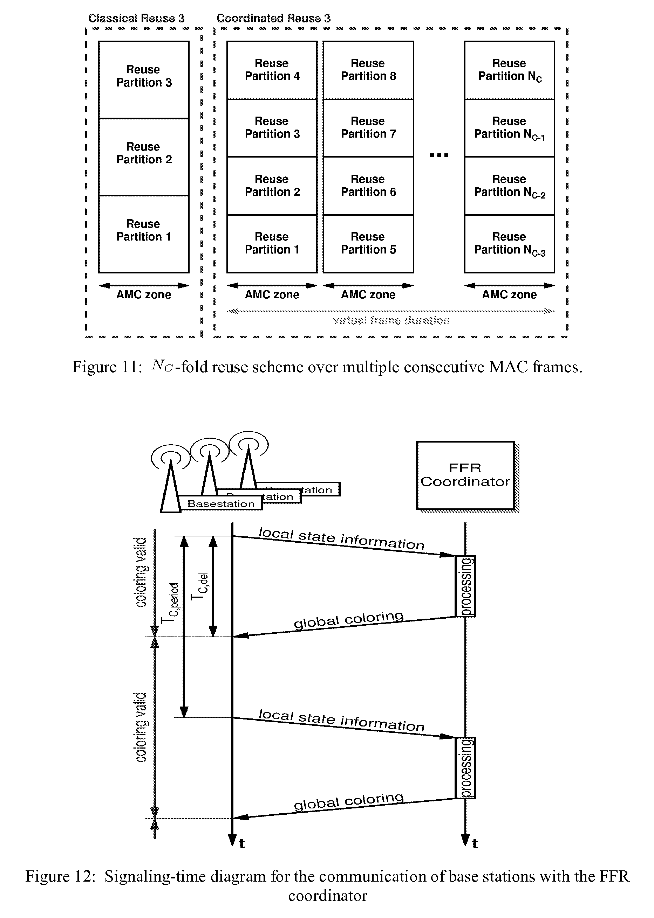

Every cell communicates all data which is necessary to generate an interference graph as described in section 3 to the central FFR coordinator. This includes measured interference and pathloss components for all mobile terminals. The coordinator then performs a complete graph coloring as detailed in section 3.3. The result of the coloring process is a color index for every mobile terminal, which is transmitted back to the base stations. If *N_{C}* is the number of colors in the coloring (where *N_{C}* ≤ *M* in general due to the sub-optimality of the graph coloring heuristics), the AMC-zone of a MAC frame is then divided into *N_{C}* parts, each corresponding to a reuse partition. This is illustrated in Fig. 10 on the right side. The Reuse 3 terminals at the cell border are then assigned to a partition depending on their color, while Reuse 1 terminals in the inner cell areas can still utilize the full AMC-zone. Alternatively, in order to avoid a fragmentation of the AMC-zone into very small partitions, the reuse partitions can be spread over several MAC-frames, as it is illustrated in Fig. 11 on the right side. In the following, the number of AMC-zones (i.e., the number of MAC-frames) which are required will be called a *virtual frame duration.* In our example of Fig. 11, the AMC-zone of a single frame is divided into *N_{F}* = 4 partitions, and the virtual frame duration is ┌*N_{C}*/*N_{F}*┐ = [*N_{C}*/4].

In order for this scheme to be practical, the communication with the FFR coordinator needs to be limited. Figure 12 shows a signaling-time diagram of the communication with the FFR coordinator. The base stations report the data which is required to build the interference graph with an update period of *T*_{*C*,}*_{period}.* After a certain delay *T*_{*C*,}*_{delay},* the coloring of the FFR coordinator arrives at the base stations and is then valid until the arrival of the next coloring. The delay *T*_{*C*,*delay*} includes all signaling delays, the processing delay in the FFR coordinator, and also all necessary synchronization delays.

Coordinated FFR ensures a coordinated allocation of resources to Reuse 3 terminals, i.e., to mobile terminals at the cell border. This global coordination is done on a larger time-scale due to the signaling delays described above. In order to make the system more agile, we perform an additional local coordination in every base station (zero-tier coordination), which coordinates the transmission of all Reuse 1 terminals. This local coordination can operate on up-to-date system state information of all cell sectors served by the respective base station.

The procedure is summarized as follows. First, all Reuse 3 terminals are reserved resources in their respective reuse partition (cmp. Fig. 11). Second, in every frame, the regular zero-tier coordination scheme is applied in every base station, obeying all conflicts in the inner interference graph. This is repeated periodically. Note that the scheduling and resource assignment is still done on a per-frame basis. If a Reuse 3 terminal does not need to be scheduled in its reserved reuse partition, the idle resources can be used by Reuse 1 terminals if allowed by the local interference coordination. This allows for a high resource utilization while at the same time ensuring good interference conditions for mobile terminals at the cell border.

### 5 Performance Evaluation

This section evaluates the performance of the proposed Coordinated FFR. Section 5.1 first investigates the performance of Coordinated FFR under ideal signaling conditions. Next, section 5.2 assesses the performance with realistic signaling delays. Finally, section 5.3 shows the impact of the mobility scenario, and section 5.4 demonstrates the impact of the graph coloring heuristic.

### 5.1 Performance under ideal signaling conditions

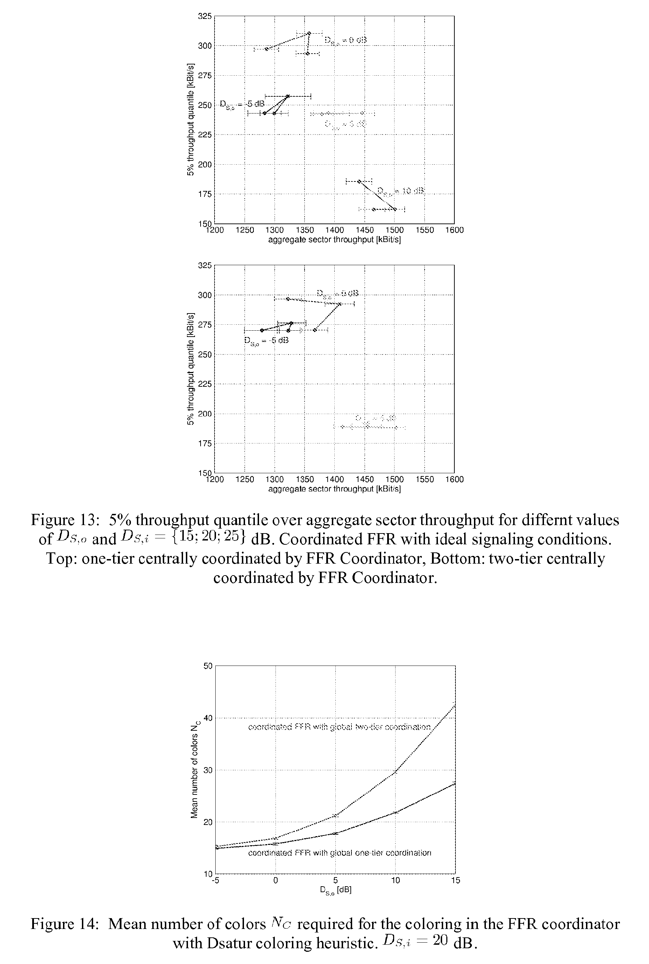

In this section, we will first evaluate the performance of Coordinated FFR under ideal signaling conditions, i.e., *T*_{*C*,*delay*} = 0, and *T*_{*C*,*period*} is equal to the virtual frame duration. Figure 13 plots the 5% throughput quantile over the aggregate throughput for different values of *D*_{*S*,*o*} and *D*_{*S*,*i*}. The left chart shows the performance if the outer coordination by the FFR coordinator is based on a one-tier coordination, whereas the right chart shows the results with an outer two-tier coordination. The coloring heuristic applied in the FFR coordinator was Dsatur [7].

In general, the performance with a one-tier coordination is slightly better when it comes to the throughput quantile, and the two-tier coordination is slightly better when it comes to the aggregate throughput. When comparing these results to a system with global coordination as described in section 3, the performance is significantly worse. However, we should mention once more that a globally coordinated system is not implementable and only serves as a performance reference. We therefore have to compare the performance of Coordinated FFR to the Reuse 3 system and to a system with classical FFR, which are both state-of-the-art. For *D*_{*S*,}*ₒ =* 0 dB and *D*_{*S*,*i*} = 20 dB, the cell border performance of Coordinated FFR is comparable to the cell border performance of the Reuse 3 system, and significantly better than the cell border performance of the system with classical FFR. With respect to the aggregate throughput, we can achieve an improvement of about 45-55% over the Reuse 3 system at the same cell border performance.

To look deeper into the difference between coordinated FFR with outer one-tier and outer two-tier coordination, Fig. 14 plots the average number of colors *N_{C}* over *D*_{*S*,*o*} for both cases. In accordance with section 3.4, the number of required colors *N_{C}* increases as the coordination diameter increases. This leads to an increase of the virtual frame duration. As Reuse 3 terminals are served only once in every virtual frame, the throughput for these terminals decreases significantly as *D*_{*S*,*o*} and hence *N_{C}* increases. On the other hand, this effect yields more available resources for the Reuse 1 terminals, which accounts for the higher aggregate throughput in the two-tier case.

### 5.2 Impact of signaling delay and update period

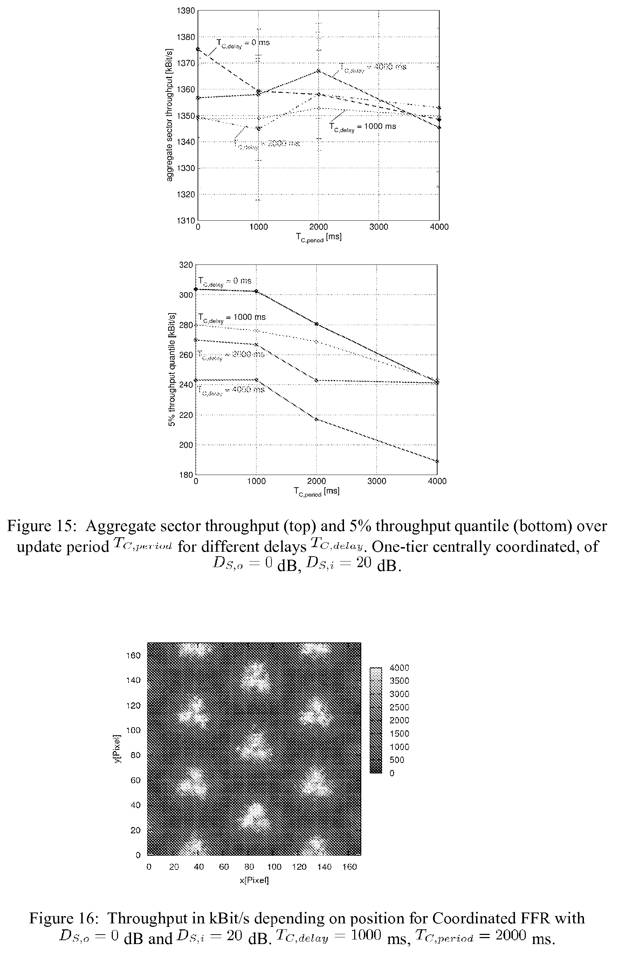

This section considers the impact of the signaling delay and the update period on the system performance. Figure 15 plots the aggregate sector throughput (left) and the 5% throughput quantile (right) for different update periods *T*_{*C*,*period*} and signaling delays *T*_{*C*,}*_{delay}.*

In general, the impact of *T*_{*C*,*period*} and *T*_{*C*,*delay*} influences the throughput quantile much more than it does the aggregate throughput. This is expected, since the coloring information is used to coordinate mobiles at the cell border, while the aggregate performance is dominated by the local zero-tier coordination, which is not degraded by any signaling delays.

An increase of the delay *T*_{*C*,*delay*} leads to a worse performance compared to an identical increase of the update period *T*_{*C*,*period,*} in particular for the throughput quantile. This is logical, since an increase of the update period implies outdated coloring information only for the later time points of the update period, while an increase of the signaling delay leads to outdated coloring information all the time.

While the throughput quantile continuously decreases as *T*_{*C*,*delay*} and *T*_{*C*,*period*} increases, the aggregate throughput increases for certain larger values of *T*_{*C*,*delay*} and *T*_{*C*,}*_{period}.* We first note that this increase in Figure 15 (left) is very small and well within the error bars of the graphs. However, regarding the results from previous studies on FFR [13], where a decrease of the throughput quantile typically leads to an increase of the aggregate performance, the observed slight throughput increase is plausible.

Figure 5.3 plots the throughput depending on the terminal position. Shown is the result for *T*_{*C*,*delay*} = 1000 ms, *T*_{*C*,}*_{period} =* 2000 ms, and for a combined zero-tier/one-tier coordination with *D*_{*S*,}*ₒ =* 0 dB and *D*_{*S*,*i*} = 20 dB. Compared to Fig. 6 and 7, it shows a less distinct throughput increase in the cell center areas, which is typical for FFR systems [13]. The graph also shows a smooth and rather symmetric degradation of the system performance from the cell center to the cell edge, with large well-to-medium covered areas.

### 5.3 Impact of terminal mobility

All results presented so far have been obtained in a high mobility scenario with mobile terminals moving at a speed of υ = 30 km/h. When mobile terminals move at high speeds, the coloring information provided by the FFR coordinator becomes outdated relatively quickly. Hence, the signaling delay *T*_{*C*,*delay*} and the update period *T*_{*C*,*period*} have a big impact on system performance.

A major use case for 802.16e are slowly moving terminals, for example carried by pedestrians, or nomadic terminal usage, where users are stationary and occasionally relocate to a new position. For these scenarios it is directly obvious that the information provided by the FFR coordinator will become obsolete much slower. Therefore, the performance of the system will be much less sensitive to larger values of *T*_{*C*,*delay*} and *T*_{*C*,}*_{period}.*

### 5.4 Impact of graph coloring heuristic

In the previous sections, the coloring heuristic Dsatur [7] was applied. It is known that more sophisticated heuristics like Tabu search [9] deliver results where the number of required colors *N_{C}* is much closer to the chromatic number *M* of the graph. For our scenario, the coloring heuristic has only a minor impact. For the case of *T*_{*C*,*delay*} = 1000 ms and *T*_{*C*,*period*} = 2000 ms, the throughput performance with Tabu search is only slightly better than the performance with Dsatur. In particular, the 5% throughput quantile remains almost unchanged, while the aggregate performance increases by about 1%. The average number of colors *N_{C}* decreases from 15.8 to 14.7, which means that the average virtual frame duration remains identical at [*N_{C}*/4] = 4. Since Reuse 3 terminals are served only once every virtual frame duration, this points out why the throughput quantile does not increase.

### 6 Conclusion

In this paper, we have first presented an optimized algorithm for global interference coordination in a cellular OFDMA network. Even though such an approach is not implementable since it requires almost instant communication among base stations, it delivers important performance values which can serve as an estimate for an upper performance bound of an interference coordinated system. In our example, the 802.16e system achieves an overall spectral efficiency of more than 1.1 Bit/Hz/s while maintaining an excellent cell edge throughput which is twice as large as in a classical Reuse 3 system with beamforming antennas.

In the second part of this paper, we proposed the concept of Coordinated Fractional Frequency Reuse, which bases the resource assignment in the outer areas of the cell on information from a central FFR coordinator. This scheme does not require a global omniscient device and can be implemented in a distributed way. The communication with the central coordinator can take place with realistic signaling delays on the order of seconds, while still maintaining a competitive system performance even in scenarios with a high terminal mobility. In particular, the cell edge performance of a classical system with Fractional Frequency Reuse can greatly be improved to almost match the cell edge performance of a Reuse 3 system. At the same time, the spectral efficiency reaches more than 0.72 Bits/hz/s, which is a 50% inmprovement over the Reuse 3 system. Finally, we argued that these values will be even better when moving to more static scenarios, since signaling delays will have less impact.

### References

[1] *IKR Simulation Library* online: http://www.ikr.uni-stuttgart.de/IKRSimLib.
[2] Mobile WiMAX - Part I: A technical overview and performance evaluation. Technical report, WiMAX Forum, February 2006.
[3] 3GPP TS 25.814. Physical layer aspects for evolved Universal Terrestrial Radio Access (UTRA) (Release 7). 3rd Generation Partnership Project, June 2006.
[4] 3GPP TSG RAN WG1#42 R1-050764. Inter-cell interference handling for E-UTRA. Technical report, Ericsson, September 2005.
[5] 3GPP TSG RAN WG1#42 R1-050841. Further analysis of soft frequency reuse scheme. Technical report, Huawei, 2005.
[6] K. Begain, G. I. Rozsa, A. Pfening, and M. Telek. Performance analysis of GSM networks with intelligent underlay-overlay. In Proc. 7th International Symposium on Computers and Communications (ISCC 2002), pages 135-141, 2002.
[7] D. Brélaz. New methods to color the vertices of a graph. Communications of the ACM, 22(4):251-256, April 1979.
[8] V. Erceg, L. Greenstein, S. Tjandra, S. Parkoff, A. Gupta, B. Kulic, A. Julius, and R. Bianchi. An empirically based path loss model for wireless channels in suburban environments. IEEE Journal on Selected Areas in Communications, 17(7):1205-1211, July 1999.
[9] A. Hertz and D. de Werra. Using tabu search techniques for graph coloring. Computing, 39(4):345-351, December 1987.
[10]IEEE 802.16e. *IEEE Standard for Local and metropolitan area networks, Part 16:* Air Interface for Fixed Broadband Wireless Access Systems, Amendment 2: Physical and Medium Access Control Layers for Combined Fixed and Mobile Operation in Licensed Bands, February 2006.
[11]M. C. Necker. Towards frequency reuse 1 cellular FDM/TDM systems. In Proc. 9th ACM/IEEE International Symposium on Modeling, Analysis and Simulation of Wireless and Mobile Systems (MSWiM 2006), pages 338-346, Torremolinos, Malaga, Spain, October 2006.
[12]M. C. Necker. Integrated scheduling and interference coordination in cellular OFDMA networks. In Proc. Broadnets, Raleigh, NC, USA, September 2007.
[13]M. C. Necker. Local interference coordination in cellular 802.16e networks. In Proc. 66th Vehicular Technology Conference (VTC 2007-Fall), Baltimore, MA, USA, October 2007.
[14]M. Sternad, T. Ottosson, A. Ahlen, and A. Svensson. Attaining both coverage and high spectral efficiency with adaptive OFDM downlinks. In Proc. 58th IEEE Vehicular Technology Conference (VTC 2003-Fall), volume 4, pages 2486-2490, Orlando, FL, USA, October 2003.

## Claims

1. Method for reducing interference in a cellular radio communication network, said network comprising a plurality of base stations and a plurality of terminals to be scheduled on frequency and/or time resources, said method comprising the steps of:
- determining interference parameters from at least two base stations;
- reporting said interference parameters from said at least two base stations to an interference coordinator;
- determining at said interference coordinator (FFR) resources to be allocated to said plurality of terminals minimising an overall interference criterion;
- reporting from said interference coordinator to said at least two base stations the resource allocated to the different terminals.

2. Method according to claim 1, wherein the interference coordinator generates an interference graph depending on the reported interference parameters and perform a colouring of the graph, each colour corresponding to a subset of the resources available in said network.

3. Method according to claim 1, wherein said network supports a fractional frequency reuse with areas having a first frequency reuse factor and areas having a second frequency reuse factor, said second frequency reuse factor being higher than said first frequency reuse factor, said method being applied to terminals located in an area with the second frequency reuse factor.

4. Method according to claim 3, used in an OFDMA system supporting fractional frequency reuse

5. Method according to claim 1, wherein said interference parameters are determined and communicated to said interference coordinator at predefined time intervals.

6. Method according to claim 1, wherein a downlink frame of the network comprises a predefined number of partitions, each partition corresponding to resources allocated to one terminal by said method.

7. Interference coordinator adapted to be used in a cellular radio communication network, said network comprising a plurality of base stations and a plurality of terminals to be scheduled on frequency and/or time resources, said interference coordinator comprising:
- means for receiving parameters from said at least two base stations, said parameters giving an information on the interference situation;
- means for determining at said interference coordinator resources to be allocated to said plurality of terminals minimising an overall interference criterion;
- means for reporting from said interference coordinator to said at least two base stations the resource allocated to the terminals.

8. Interference coordinator according to claim 7, adapted to be located in a base station or in a network access controller, or in any central entity of the network.

9. Base station adapted to be used in a cellular radio communication network, said network comprising a plurality of base stations and a plurality of terminals to be scheduled on frequency and/or time resources, said base station comprising:
- Means for determining interference parameters
- Means for reporting said interference parameters to an interference coordinator
- Means for receiving from said interference coordinator resource allocation messages.
